# EUROPÄISCHE PATENTSCHRIFT

(11) **EP 0 650 050 B1**
(45) Veröffentlichungstag und Bekanntmachung des Hinweises auf die Patenterteilung: **23.01.2002**
(21) Anmeldenummer: 94114581.5
(22) Anmeldetag: 16.09.1994
(51) Int. Cl.: G01N 27/49, G01N 27/28

(54) **Elektrochemische Messzelle mit einem gasdurchlässigen Gehäuse**
Electrochemical measuring cell having a gas-permeable housing
Cellule d'analyse électrochimique avec boîtier perméable au gaz

(30) Priorität: 18.10.1993 DE 4335409
(43) Veröffentlichungstag der Anmeldung: 26.04.1995
(73) Patentinhaber: DRÄGERWERK AKTIENGESELLSCHAFT, 23542 Lübeck (DE)
(72) Erfinder: Kiesele, Herbert, Dr., D-23568 Lübeck (DE)

(56) Entgegenhaltungen:
- EP-A- 0 298 570
- DE-A- 2 627 487
- GB-A- 1 152 794
- GB-A- 2 053 482
- US-A- 4 017 373
- US-A- 4 051 006
- US-A- 4 455 213

## Beschreibung

Die Erfindung betrifft eine elektrochemische Meßzelle zum Nachweis von gasförmigen Bestandteilen in Luft, welche innerhalb eines Gehäuses eine Meßelektrode und eine Gegenelektrode aufnimmt, die in Flüssigkeitsverbindung mit einem Elektrolyten stehen, und von denen die Meßelektrode über eine gaspermeable, elektrolytundurchlässige Membran mit den nachzuweisenden Gasbestandteilen in Diffusionskontakt gebracht ist.

Eine derartige elektrochemische Meßzelle ist aus der US 4 051 006 bekanntgeworden. Bei der bekannten Meßzelle ist ein zylindrischer Rundkörper aus Polytetrafluorethylen an seinen beiden Stirnseiten mit jeweils einem ringförmigen Deckel und einem Klemmring versehen. Der Deckel und der Ring spannen jeweils eine poröse Membran ein, welche für gasförmige Bestandteile durchlässig, für den im Gehäuseinnenraum befindlichen Elektrolyten jedoch undurchlässig ist. Die im Deckel eingespannte Membran ist über eine Diffusionsstrecke mit dem nachzuweisenden, gasförmigen Bestandteil der Luft in Verbindung gebracht und ermöglicht somit den Zutritt des nachzuweisenden Gases in den mit Elektrolyten gefüllten Innenraum, welcher ebenfalls die Meßelektrode in unmittelbarer Nachbarschaft zur Diffusionsmembran aufnimmt. Der Elektrolyt ist in einem hydrophilen Füllkörper aus Glaswolle aufgenommen und steht in Flüssigkeitskontakt zwischen der Meßelektrode und einer Gegenelektrode. Die Gegenelektrode befindet sich innerhalb des Füllkörpers und ist vollständig mit Elektrolytflüssigkeit umgeben. Die von dem Ring eingespannte Membran ist ebenfalls für gasförmige Bestandteile durchlässig, jedoch für den Elektrolyten undurchlässig. Sie dient dazu, die eventuell während der elektrochemischen Reaktion entstandenen Gasbestandteile an die Umgebung abzugeben. Ein bei den bekannten elektrochemischen Meßzellen auftretendes Problem ist der Druckausgleich zwischen dem den Elektrolyten enthaltenen Elektrolytraum des Gehäuses und der Umgebung. Der Elektrolytraum wird im allgemeinen nur teilweise gefüllt, da sich das Elektrolytvolumen mit den Umgebungsbedingungen (Feuchte, Temperatur) verändert. Daher ist im Innenraum des Sensors normalerweise eine Gasblase vorhanden. Sinkt der Umgebungsdruck ab, z.B. beim Transport im Flugzeug, so entsteht im Sensor ein Überdruck, der nur dann problemlos abgebaut werden kann, wenn zumindestens eine der gasdurchlässigen Membranen nicht vom Elektrolyten bedeckt ist. Dies ist bei der bekannten Zelle nur unter günstigen Bedingungen möglich, bei senkrechter Orientierung und ohne Elektrolytüberschuß. Sofern jedoch die Membranen vom Elektrolyten bedeckt sind, wird beim Druckausgleich Elektrolyt durch die Membranen oder evtl. vorhandene Kapillarspalte gedrückt. Dies kann zu einer Gefärdung des Benutzers, einer Beschädigung des Meßgerätes und zu einer irreversiblen Veränderung der Membranen führen. Die Veränderung der Meßelektrodenmembran wiederum, hat eine Verfälschung der Meßwerte zur Folge, die bis zum vollständigen Verlust der Empfindlichkeit führen kann.

Hält die Membran dem Flüssigkeitsdruck stand, so wird sie dennoch deformiert, so daß sich die Diffusionseigenschaften und damit die Meßqualität ändern.

Der vorliegenden Erfindung liegt somit die Aufgabe zugrunde, eine elektrochemische Meßzelle der genannten Art so zu verbessern, daß bei einem einfachen Gehäuseaufbau ein wirksamer Druckausgleich zwischen Elektrolytraum und Umgebung möglich ist.

Die Lösung der Aufgabe erfolgt mit den Merkmalen des Patentanspruchs 1.

Das Dokument EP-A-0298570 offenbart ebenfalls eine elektrochemische Meßzelle, wobei der den Elektrolytenraum umgebende Gehäusemantel mit zwei Durchbrüchen versehen ist, welche mit gaspermeablen, elektrolytundurchlässigen Membranen ausgestattet sind.

Der Vorteil der Erfindung liegt im wesentlichen darin, daß der den Elektrolytraum umgebende Gehäusemantel selbst als eine elektrolytundurchlässige, gaspermeable Sperre ausgebildet ist, über welchen ein Druckausgleich zwischen dem Elektrolytraum und der Umgebung stattfindet, ohne daß der Elektrolyt selbst auslaufen kann. Weitgehend unabhängig von der Einbauposition oder Betriebslage des Sensors findet eine im Elektrolyten entstandene Gasblase mit hoher Wahrscheinlichkeit immer einen Ort, an dem die Verbindung zwischen Elektrolytraum / Gasblase zu der Umgebung hergestellt ist. Somit ist auf einfache Weise, ohne daß eine zusätzliche, mechanisch aufwendige, Druckausgleichsvorrichtung vorgesehen zu werden braucht, ein wirkungsvoller Druckausgleich sichergestellt. Im Vergleich zum Stand der Technik wird nunmehr nicht die Membran selbst der Druckbelastung ausgesetzt, die sich einstellen würde, wenn infolge von Druckunterschieden zwischen Elektrolytraum und Umgebung ein Differenzdruck über der Membran entstehen würde.

Zweckmäßigerweise wird der Gehäusemantel aus porösem, gesintertem Polytetrafluorethylen gebildet. Das flüssigkeitsabweisende Polytetrafluorethylen läßt infolge seiner offenporigen Struktur einen Druckausgleich zwischen einer Gasblase im Elektrolytraum und der Umgebung zu.

Der gesamte Mantel enthält somit eine Vielzahl von Durchbrüchen und wirkt gleicherweise wegen seiner hydrophoben, offenporigen Struktur als eine Sperre gegenüber dem Elektrolyten, jedoch als Durchlaß für Gas zum Zwecke eines Druckausgleiches zwischen dem Elektrolytraum und der Umgebung. Die poröse Gehäusewand aus PTFE läßt jetzt praktisch an jeder beliebigen Stelle innerhalb des Elektrolytraumes die gebildete Gasblase zum Zwecke des Druckausgleiches mit der Umgebung in Kontakt treten: Es gibt praktisch keine Stelle an der Gehäusewand, an welcher nicht eine genügende Anzahl von Poren für den erforderlichen Druckausgleich sorgen könnte.

Für eine genaue und zuverlässige Messung ist es erforderlich, daß der Elektrolyt möglichst ungehindert und in jeder Lage in Flüssigkeitskontakt mit der Meßelektrode und der Gegenelektrode und gegebenenfalls mit einer Bezugselektrode bleibt. Andererseits ist es zweckmäßig, das Gehäuse der Meßzelle vor mechanischen Verformungen zu schützen und stabil zu halten. Beide Forderungen werden auf geschickte Weise dadurch gelöst, daß der Elektrolytraum einen festen, porösen Füllkörper enthält, der einerseits mit dem Elektrolyten getränkt ist, und der andererseits sowohl an den Innenwänden des Gehäusemantels als auch an der flächigen Gegenelektrode sowie an der zum Elektrolytraum gewandten Oberfläche der Diffusionsmembran anliegt, welche ihrerseits eine als Meßelektrode dienende metallische Beschichtung trägt. Der poröse Füllkörper dient dabei einerseits als Elektrolytreservoir, aus dem in jeder Betriebslage der Meßzelle genügend Elektrolytflüssigkeit zur Benetzung der Meßelektrode als auch der Gegenelektrode zur Verfügung und nach entsprechendem Verbrauch nachgeliefert bzw. ausgetauscht wird, andererseits stützt er die Wandung des Gehäusemantels und die flächigen Elektrodenmembranen gegeneinander ab. Als ein geeignetes Material für den Füllkörper hat sich gesintertes Glas erwiesen.

Für den Fall, daß zur Messung eine Bezugselektrode zur Stabilisierung des Bezugspotentials eingesetzt wird, kann diese in einer Aushöhlung des Füllkörpers untergebracht sein, welche bis in den Bereich seiner Körpermitte vordringt, und an deren Boden die Bezugselektrode angebracht ist. Die Aushöhlung ist dann in Form eines Sackloches ausgebildet, und die Öffnung des Sackloches weist im Hohlkörper auf die Gegenelektrode hin. Die Bezugselektrode kann aus einem feinen Edelmetalldraht bestehen, der mit Glaswolle in der Aushöhlung fixiert wird.

Die Außenfläche des porösen Füllkörpers, welche mit der Innenfläche der Gehäusewand im Elektrolytraum in Berührung steht, ist mit Ausnehmungen ausgestattet, welche teilweise mit dem Elektrolyten gefüllt sind. Die Ausnehmungen dienen als weiteres Flüssigkeitsreservoir, aus dem heraus der poröse Füllkörper gefüllt werden kann. Insgesamt wird die Aufnahmekapazität des Elektrolytraumes durch die Ausnehmungen vergrößert, ohne daß die gewünschten Vorteile des festen porösen Füllkörpers aufgegeben werden.

Ein einfacher Zusammenbau einer elektrochemischen Meßzelle mit wenigen, einfach handzuhabenden Bestandteilen ergibt sich daraus, daß der Gehäusemantel eine zylindrische Form besitzt und daß seine Stimöffnungen mit einem Elektrodenträger versehen sind, welche jeweils eine Diffusionsmembran mit dem Gehäusemantel einspannen, die ihrerseits an der dem Elektrolytraum zugewandten Oberfläche eine die Meßelektrode bzw. die Gegenelektrode bildende Beschichtung aufweisen und die mittels des Elektrodenträgers über einen Vliesbelag gegen die Stirnflächen des Füllkörpers gespannt sind, wobei einer der Elektrodenträger mit einer für den nachzuweisenden Gasbestandteil zugänglichen Diffusionsöffnung versehen ist. An der Stelle, wo die Diffusionsöffnung liegt, ist somit die Meßelektrode vorgegeben.

Um den aus porösem, gesintertem PTFE gefertigten Gehäusemantel vor äußeren Beschädigungen oder Verschmutzungen zu schützen, wird er zweckmäßigerweise von einer gasundurchlässigen, jedoch den Diffusionsweg zwischen Gehäusemantel und Umgebung an ausgewählten Orten freilassenden Hülle umgeben. Diese Hülle kann eine eng anliegende Kunstoffolie sein, oder sie wird aus einem über den Gehäusemantel gezogenen Schrumpfschlauch gebildet. An frei wählbaren Orten der Hülle bzw. des Schrumpfschlauches sind einige wenige, im Grenzfall lediglich eine Öffnung vorgesehen, durch die der Diffusionsweg zwischen Elektrolytraum und Umgebung aufrechterhalten bleibt. Bei dem aus porösem, gesintertem PTFE gefertigten Gehäusemantel kann die Öffnung an einer beliebigen Stelle vorgesehen sein, da die Diffusion innerhalb des Gehäusemantels unbehindert bleibt und das diffundierende Gas von jeder Stelle des Gehäusemantels aus bis zu der vorgesehenen Öffnung in der Hülle vordringen kann, um dann mit der Umgebung zu kommunizieren. Auf diese Weise hat man eine stabile, überaus dichte Konstruktion ermöglicht, die dennoch mit wenigen Bauteilen und einfachen Fertigungsschritten herstellbar ist.

Ein Ausführungsbeispiel der Erfindung wird anhand der schematischen Zeichnung dargestellt und im folgenden näher erläutert.

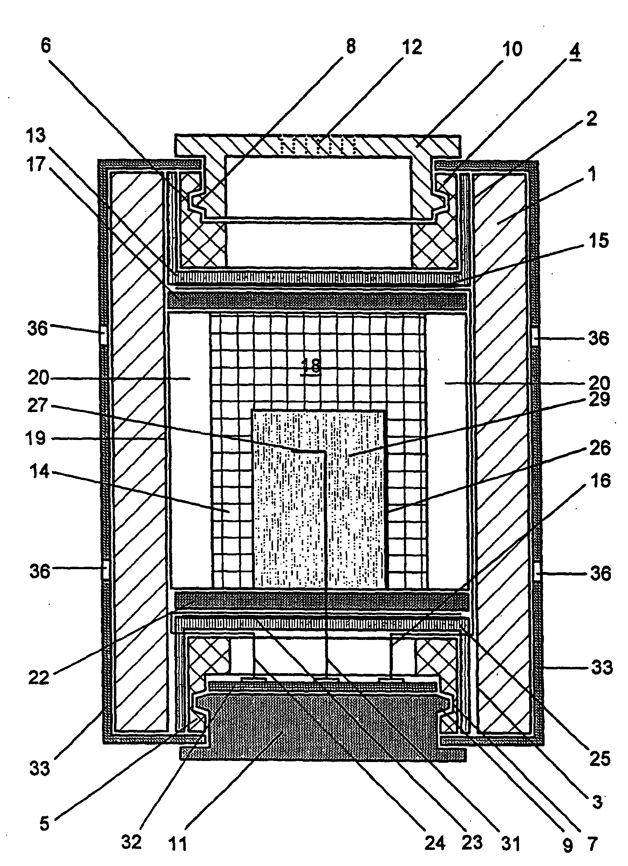

Die einzige Figur zeigt eine elektrochemische Meßzelle mit einem zylindrischen Gehäusemantel (1), an welchem sich die übrigen Bauelemente anfügen. An jeder der beiden Stirnöffnungen (2, 3) des Gehäusemantels (1) ist ein ringförmiger Elektrodenträger (4, 5) befestigt. An der Innenfläche der Elektrodenträger (4, 5) ist jeweils eine Rastausnehmung (6, 7) vorgesehen, in die eine dazu passende Rastung (8, 9) für einen Deckel (10) bzw. einen Stecker (11) einrastet. Der Deckel (10) dient als Diffusionsbarriere für das nachzuweisende Gas und enthält eine Vielzahl von Diffusionsstrecken (12), die in Form von Kapillaren oder porösen Öffnungen ausgebildet sein können. Der Elektrodenträger (4) spannt eine Diffusionsmembran (13) zwischen sich und dem Gehäusemantel (1) ein, welche sich über die gesamte lichte Öffnung des ringsförmigen Elektrodenträgers (4) erstreckt und die den Diffusionsstrecken (12) des Deckels (10) gegenüberliegend ausgesetzt ist. Die Membran (13) trennt die Umgebung von dem im Gehäusemantel (1) eingeschlossenen Elektrolytraum (14) ab. Die Membran (13) ist für das nachzuweisende Gas durchlässig, für den im Elektrolytraum (14) befindlichen Elektrolyten jedoch undurchlässig. Auf der dem Elektrolytraum (14) zugewandten Oberfläche der Membran (13) ist eine metallische Beschichtung (15) vorgesehen, welche als Meßelektrode dient. Sie ist mit einem Kontaktdraht (16) versehen. Die flächige Elektrode (15) erstreckt sich im wesentlichen ebenfalls über den gesamten Bereich der lichten Öffnung, die durch den ringförmigen Elektrodenträger (4) zum Deckel (10) offenliegt. Zum Elektrolytraum (14) hin gerichtet ist die metallische Beschichtung (15) durch einen Vliesbelag (17) bedeckt, der dafür sorgen soll, daß die im Elektrolytraum (14) befindliche Elektrolytflüssigkeit möglichst gleichmäßig die gesamte Elektrodenfläche (15) bedeckt. Der Elektrolytraum (14) ist im wesentlichen vollständig ausgefüllt durch einen porösen Füllkörper (18), welcher aus gesintertem Glas besteht. Der Füllkörper (18) besitzt an seiner zur Innenwand (19) des Gehäusemantels (1) gewandten Außenfläche Ausnehmungen (20), welche als Elektrolytreservoir dienen. Die beiden Stirnflächen des Füllkörpers (18) liegen zum einen an dem Vliesbelag (17) an und zum anderen an einem Vliesbelag (22), welcher seinerseits eine metallische Beschichtung (23) als Gegenelektrode auf der Membran (25) abdeckt. Der mit Elektrolytflüssigkeit gefüllte poröse Füllkörper (18) stellt somit die elektrolytmäßige Brücke zwischen der Meßelektrode (15) und der Gegenelektrode (23) dar. Die Gegenelektrode (23) ihrerseits ist mit einem Kontaktdraht (24) versehen. Der im Gehäusemantel (1) befestigte Elektrodenträger (5) sorgt für eine ortsfeste Lage der Elektrodenmembran (25), auf welcher die Gegenelektrode (23) als metallische Beschichtung aufgetragen ist. Im Inneren des porösen Füllkörpers (18) ist eine Aushöhlung (26) angebracht, die in Form eines Sackloches, von einer der Stirnseiten des Füllkörpers (18) ausgehend, bis hin zur Mitte des Körpers vordringt. Zweckmäßigerweise geht die Aushöhlung (26) von derjenigen Stirnfläche des Füllkörpers (18) aus, welche der Gegenelektrode (23) gegenüberliegt. In der Aushöhlung (26) in Höhe des Bodens des Sackloches ist eine drahtförmige Bezugselektrode (27) eingebettet. Das übrigbleibende Volumen der Aushöhlung (26) ist mit Glaswolle (29) ausgefüllt. Die Elektroden (15, 23, 27) sind mit ihren Kontaktdrähten (16, 24, 31) mit einer Leiterplatine (32) verbunden, auf welcher Vorverstärker Signalverarbeitungseinrichtungen und weitere elektronische Bauteile eingebaut sind. Die Leiterplatine (32) befindet sich auf der Oberfläche des Steckers (11) und besitzt ihrerseits eine nicht dargestellte Anschlußleiste für die notwendigen Anschlußkontakte zur Versorgung der Meßzelle bzw. zur Weiterleitung der vorverarbeiteten Signale. Der Gehäusemantel (1) sowie die mit dem Gehäusemantel (1) bündig abschließenden Oberflächen der Elektrodenträger (4, 5) sind über eine gasundurchlässige Hülle in Form eines Schrumpfschlauches (33) miteinander verbunden und fest gegeneinander gedrückt, so daß einerseits eine flüssigkeitsdichte Zusammenpressung der einzelnen Bauteile und eine gasundurchlässige Abdichtung der Außenwände andererseits sichergestellt ist. Um einen Druckausgleich zwischen dem Elektrolytraum (14) und der Umgebung aufrechtzuerhalten, ist der Gehäusemantel (1) vollständig aus porösem, gesintertem PTFE hergestellt. An geeigneter Stelle sind eine oder mehrere Mantelöffnungen (36) vorgesehen. Die Diffusion von Gas aus dem Elektrolytraum (14) in die Umgebung kann von der gesamten Oberfläche der Innenwand (19) des Gehäusemantels (1) durch den Mantel (1) durchdringen und an den Öffnungen (36) austreten. Dabei ist der Ort der geeigneten Anbringung von Mantelöffnungen (36) im Belieben des Fachmannes gestellt, wobei lediglich konstruktionsbedingte Eignungen dafür maßgeblich sind.

Die Einzelheiten der elektrochemischen Meßzelle nach der Figur sind der Deutlichkeit halber voneinander in gewissem räumlichen Abstand getrennt gezeichnet, es soll dies jedoch nur zur bildlichen Klarstellung dienen, wobei in der Praxis sämtliche Bauteile mit ihren Oberflächen berühungsdicht aneinandergedrückt sind, um ein dichtes und leckfreies Zusammenfügen der Einzelteile zu gewährleisten.

## Patentansprüche

1. Elektrochemische Meßzelle zum Nachweis von gasförmigen Bestandteilen in Luft, welche innerhalb eines Gehäuses eine Meßelektrode und eine Gegenelektrode aufnimmt, die in Flüssigkeitsverbindung mit einem Elektrolyten stehen und von denen die Meßelektrode über eine gaspermeable, elektrolytundurchlässige Membran mit den nachzuweisenden Gasbestandteilen in Diffusionskontakt gebracht ist, **dadurch gekennzeichnet, daß** der den Elektrolytraum (14) umgebende Gehäusemantel (1) aus einem Material von porösem, gesintertem Polytetrafluorethylen gebildet ist.

2. Elektrochemische Meßzelle nach Anspruch 1 oder 2, **dadurch gekennzeichnet, daß** der Elektrolytraum (14) einen festen, porösen Füllkörper (18) enthält, der einerseits mit dem Elektrolyten getränkt ist und andererseits sowohl an der Innenwand (19) des Gehäusemantels (1) als auch an der flächigen Gegenelektrode (23) und an der zum Elektrolytraum (14) gewandten Oberfläche der Diffusionsmembran (13) anliegt, welche ihrerseits eine als Meßelektrode dienende metallische Beschichtung (15) trägt.

3. Elektrochemische Meßzelle nach Anspruch 3, **dadurch gekennzeichnet, daß** der Füllkörper (18) aus gesintertem Glas besteht.

4. Elektrochemische Meßzelle nach Anspruch 3 oder 4, **dadurch gekennzeichnet, daß** der Füllkörper (18) eine bis in den Bereich seiner Körpermitte vordringenden Aushöhlung (26) besitzt, in deren Bodennähe eine Bezugselektrode (27) angebracht ist.

5. Elektrochemische Meßzelle nach einem der Ansprüche 3 bis 5, **dadurch gekennzeichnet, daß** der Füllkörper (18) an seiner der Innenwand (19) des Gehäusemantels (1) zugewandten Oberfläche Ausnehmungen (20) aufweist, die mit dem Elektrolyten gefüllt sind und die sich zur Innenwand (19) hin öffnen.

6. Elektrochemische Meßzelle nach einem der Ansprüche 3 bis 6, **dadurch gekennzeichnet, daß** der Gehäusemantel (1) eine zylindrische Form besitzt und daß seine Stirnöffnungen (2, 3) mit einem Elektrodenträger (4, 5) versehen sind, welche jeweils eine Diffusionsmembran (13, 25) gegenüber dem Gehäusemantel (1) einspannen, die ihrerseits an der dem Elektrolytraum (14) zugewandten Oberfläche eine die Meßelektrode (15) bzw. Gegenelektrode (23) bildende Beschichtung aufweisen und die mittels des Elektrodenträgers (4, 5) über einen Vliesbelag (17, 22) gegen die Stirnflächen des Füllkörpers (18) gespannt sind, wobei einer der Elektrodenträger (4, 5) mit einer für den nachzuweisenden Gasbestandteil zugänglichen Diffusionsstrecke (12) in Verbindung gebracht ist.

7. Elektrochemische Meßzelle nach einem der Ansprüche 2 bis 7, **dadurch gekennzeichnet, daß** der Gehäusemantel (1) von einer gasundurchlässigen, den Diffusionsweg zwischen Gehäusemantel (1) und Umgebung an ausgewählten Orten über Mantelöffnungen (36) freilassenden Hülle (33) umgeben ist.

8. Elektrochemische Meßzelle nach Anspruch 8, **dadurch gekennzeichnet, daß** die Hülle aus einem eng anliegenden Schrumpfschlauch (33) besteht.

## Claims

1. Electrochemical measuring cell for detecting gaseous components in air, housing a measuring electrode and a counter electrode inside a housing, these electrodes being in fluid connection with an electrolyte, and the measuring electrode of which is brought by means of a gas-permeable, electrolyteimpermeable membrane into diffusion contact with the gas components to be detected, **characterised in that** the housing casing (1) surrounding the electrolyte chamber (14) is formed from a material of porous, sintered poly tetra fluoro ethylene.

2. Electro-chemical measuring cell according to claim 1 or 2, **characterised in that** the electrolyte chamber (14) contains a fixed, porous filler body (18) which on the one hand is saturated with the electrolyte, and on the other hand abuts both the inner wall (19) of the housing casing (1), and the flat counter electrode (23), and the surface of the diffusion membrane (13) facing the electrolyte chamber (14), the membrane in turn carrying a metallic coating (15) used as a measuring electrode.

3. Electro-chemical measuring cell according to claim 3, **characterised in that** the filler body (18) is made of sintered glass.

4. Electro-chemical measuring cell according to claim 3 or 4, **characterised in that** the filler body (18) has a hollow (26) which penetrates into the region of the body centre, on the bottom of which is fitted a reference electrode (27).

5. Electro-chemical measuring cell according to one of claims 3, to 5, **characterised in that** the filler body (18) has recesses (20) on its surface facing the inner wall (19) of the housing casing (1), these recesses being filled with the electrolyte and opening towards the inner wall (19).

6. Electro-chemical measuring cell according to one of claims 3 to 6, **characterised in that** the housing casing (1) has a cylindrical shape and **in that** its front apertures (2, 3) are provided with an electrode carrier (4, 5) which respectively clamp a diffusion membrane (13, 25) with respect to the housing casing (1), which in turn, on the surface facing the electrolyte chamber (14), have a coating forming the measuring electrode (15) or counter electrode (25), and which are clamped against the front surfaces of the filler body (18) by means of the electrode carrier (4, 5) by a fabric covering (17, 22), one of the electrode carriers (4, 5) being brought into connection with a diffusion section (12) accessible to the gas component to be detected.

7. Electro-chemical measuring cell according to one of claims 2 to 7, **characterised in that** the housing casing (1) is surrounded by a gas-impermeable jacket (33) which uncovers the diffusion path between the housing casing (1) and the surrounding area at selected places by means of casing apertures (36).

8. Electro-chemical measuring cell according to claim 8, **characterised in that** the jacket is made of a tightly fitting shrink tube (33).

## Revendications

1. Cellule électrochimique de mesure destinée à détecter des composants gazeux dans l'air, logeant, à l'intérieur d'un boîtier, une électrode de mesure et une contre-électrode qui se trouvent en liaison liquide avec un électrolyte, l'électrode de mesure étant mise en contact de diffusion avec les composants gazeux à détecter par l'intermédiaire d'une membrane perméable aux gaz mais ne laissant pas passer l'électrolyte, **caractérisée en ce que** l'enveloppe de boîtier (1) qui entoure l'espace à électrolyte (14) est constitué en polytétrafluoréthylène fritté poreux.

2. Cellule électrochimique de mesure selon la revendication 1, **caractérisée en ce que** l'espace à électrolyte (14) contient un corps de remplissage (18) solide, poreux qui, d'une part, est imprégné d'électrolyte et, d'autre part, repose contre la paroi intérieure (19) de l'enveloppe de boîtier (1), ainsi que contre la contre-électrode (23) plate et contre la surface de la membrane de diffusion (13) qui est orientée vers l'espace à électrolyte (14), surface qui porte, quant à elle, un revêtement métallique (15) qui sert d'électrode de mesure.

3. Cellule électrochimique de mesure selon la revendication 2, **caractérisée en ce que** le corps de remplissage (18) est constitué en verre fritté.

4. Cellule électrochimique de mesure selon la revendication 2 ou 3, **caractérisée en ce que** le corps de remplissage (18) possède une cavité (26) s'avançant jusque dans la zone de son centre, à proximité du fond de laquelle est montée une électrode de référence (27).

5. Cellule électrochimique de mesure selon l'une des revendications 2 à 4, **caractérisée en ce que** le corps de remplissage (18) présente, sur sa surface orientée vers la paroi intérieure (19) de l'enveloppe de boîtier (1), des évidements (20) remplis d'électrolyte et qui s'ouvrent en direction de la paroi intérieure (19).

6. Cellule électrochimique de mesure selon l'une des revendications 2 à 5, **caractérisée en ce que** l'enveloppe de boîtier (1) possède une forme cylindrique, et **en ce que** ses ouvertures frontales (2, 3) sont pourvues d'un support d'électrodes (4, 5), une membrane de diffusion (13, 25) étant montée entre lui et l'enveloppe de boîtier (1), la membrane présentant, sur sa surface orientée vers l'espace à électrolyte (14), un revêtement qui constitue l'électrode de mesure (15) ou la contre-électrode (23) et qui, grâce au support d'électrodes (4, 5) et par l'intermédiaire d'un revêtement en nappe de fibres (17, 22), est monté contre les faces frontales du corps de remplissage (18), l'un des supports d'électrodes (4, 5) étant mis en communication avec un parcours de diffusion (12) auquel le composant gazeux à détecter a accès.

7. Cellule électrochimique de mesure selon l'une des revendications 2 à 6, **caractérisée en ce que** l'enveloppe de boîtier (1) est entourée par une gaine (33) imperméable aux gaz, laissant libre le parcours de diffusion entre l'enveloppe de boîtier (1) et l'environnement, en des points sélectionnés, grâce à des ouvertures dans l'enveloppe (36).

8. Cellule électrochimique de mesure selon la revendication 7, **caractérisée en ce que** la gaine est constituée par un tube thermorétractable (33) ajusté.
